# EUROPEAN PATENT SPECIFICATION

(11) **EP 3 587 745 B1**
(45) Date of publication and mention of the grant of the patent: **06.01.2021**
(21) Application number: 19180708.0
(22) Date of filing: 17.06.2019
(51) Int. Cl.: F01D 17/18, F01D 17/14, F16K 1/50, F16K 1/44

(54) **SHUTTER AND CORRESPONDING CONTROL VALVE ASSEMBLY OF A STEAM TURBINE**
VERSCHLUSS UND ZUGEHÖRIGE STEUERVENTILANORDNUNG EINER DAMPFTURBINE
VOLET ET ENSEMBLE DE SOUPAPE DE COMMANDE ASSOCIÉ D'UNE TURBINE À VAPEUR

(30) Priority: 21.06.2018 IT 201800006560
(43) Date of publication of application: 01.01.2020
(73) Proprietor: Nuovo Pignone Tecnologie - S.r.l., 50127 Florence (IT)
(72) Inventor: PIERI, Marco, 50127 Florence (IT)
(74) Representative: BRP Renaud & Partner mbB Rechtsanwälte Patentanwälte Steuerberater

(56) References cited:
- GB-A- 1 200 923
- US-A- 2 790 453
- US-A- 3 625 241
- US-A- 3 753 449

## Description

### TECHNICAL FIELD

The field of the invention relates to turbines generally, and more particularly to new geometries, and/or arrangement, of shutter(s) in a control valve assembly of a steam turbine. Turbines, especially steam turbines, comprise nozzle groups and control valves coordinated with the nozzle groups.

### BACKGROUND ART

In a steam turbine the working fluid, typically water in steam phase, is provided by a tubular inlet to a nozzle group through control valves. The steam turbine comprises a traverse which supports shutters, and control rods connected to the traverse and which are movable by a drive mechanism. The shutters are able to slide through recesses formed in the traverse. The control rods are able to control the position of the traverse such that the shutters close and open the control valves according to predefined sequences.

US-3642381 discloses a steam turbine with nozzle groups respectively coordinated with control valves. Said control valves comprises shutters mounted within a traverse by which they are driven in specific closing and opening sequence. This sequence is determined by the elevation of guide bushings for the shutters, the bushings being mounted in respective recesses formed in the traverse. A final lock is permitted by nuts that are threaded on ends of the shutters. Control rods engage the traverse. US 3 625 241 discloses a shutter for a control valve assembly of a steam turbine according to the preamble of claim 1 wherein enlarged heads of the shutters are used for the final locking of the shutters wihtin the traverse. Heads, stems and closing ends of the shutters are formed as a single piece in order to reduce fatigue failure of the shutters.

Operatively, when the control valves are closed, cones of the shutters are forced by steam pressure in inlet chambers against seats of the control valves. When control rods pull up the traverse, the control valves open according to the specific sequence. Disadvantageously said opening causes stress on the shutters due to steam turbulence between the traverse and the inlet chambers.

Shutters are stressed by both the pull up of the traverse, i.e. in a vertical direction, and the steam running under the traverse, between the traverse and the inlet chambers, i.e. in horizontal direction. Further the steam flows between the traverse and the inlet chambers, swirling such that the shutters are stressed also around their vertical axis, and generally in according to random directions which leads to stress concentration on threads on the ends of the shutters.

Those movements of the shutters with respect to the traverse originates cracks on the shutters. Disadvantageously breakages of the shutters cause inefficiencies of the control valve assembly leading to stop the turbine in order to substitute damaged shutters.

### SUMMARY

In one aspect, the subject matter disclosed herein is directed to a shutter for a control valve assembly of a steam turbine, as defined in claim 1. The shutter is less sensitive to fatigue stress due to swirl and vibration. In embodiments herein disclosed the shutters have a specific and not obvious shape which allows to couple the shutters with the traverse without using nuts or similar. The shutters are not provided with threads or similar means which increase the stress concentration.

In another aspect, the subject matter disclosed herein concerns a control valve assembly for a steam turbine, as defined in claim 5, which avoids critical tasks as nut caulking. Advantageously each shutter is engaged within a respective recess of the traverse such that it can slightly move within the recess without any risk of disengaging from the recess. The turbulence energy of the steam is lost by the contact of external surfaces of the shutters with internal surfaces of the recesses. It is always a surface type contact, not concentrated in few points which would increase the stress on the shutters.

### BRIEF DESCRIPTION OF THE DRAWINGS

These and other features of the present invention will become more apparent from the following detailed description of a specific embodiment thereof, shown by way of non-limitative example in the accompanying drawings, in which:
Fig.1 is a front view, partially in section, of an upper portion of a steam turbine;
Fig.2 is a perspective view of a shutter valve;
Fig.3 is a front view of the shutter valve;
Fig.4 is a lateral view of the shutter valve;
Fig.5 is a top plan view of the shutter valve;
Fig.6 is a perspective view of a traverse;
Fig.7 is a lateral view of the traverse;
Fig.8 is a frontal view of the traverse;
Fig.9 is a top plan view of the traverse;
Fig.10 is a perspective view of a cap of the traverse;
Fig.11 is a lateral view of the cap;
Fig.12 is a bottom plan view of the cap;
Fig.13 is a frontal view of the cap;
Fig.14 is a top plan view of the cap;
Fig.15 is a perspective view of a spacer;
Fig.16 is a top plan view of the spacer;
Fig.17 is a lateral view of the spacer;
Fig.18 is a frontal view of the spacer;
Fig.19 is a perspective view of a rod;
Fig.20 is a lateral view of the rod;
Fig.21 is a frontal view of the rod;
Fig.22 is a bottom plan view of the rod;
Fig.23 is a perspective view of a control valve assembly, in a first mounting phase;
Fig.24 is a sectional view according to line XXIV-XXIV of Fig.25;
Fig.25 is a sectional view according to line XXV-XXV of Fig.26;
Fig.26 is a top plan view of the assembly of Fig.23;
Fig.27 is a perspective view of the assembly, in a second mounting phase;
Fig.28 is a sectional view according to line XXVIII-XXVIII of Fig.29;
Fig.29 is a sectional view according to line XXIX-XXIX of Fig.30;
Fig.30 is a top plan view of the assembly of Fig.27;
Fig.31 is a perspective view of the assembly, in a third mounting phase;
Fig.32 is a sectional view according to line XXXII-XXXII of Fig.33;
Fig.33 is a sectional view according to line XXXIII-XXXIII of Fig.34;
Fig.34 is a top plan view of the assembly of Fig.31;
Fig.35 is a perspective view of the assembly, in a fourth mounting phase;
Fig.36 is a sectional view according to line XXXVI-XXXVI of Fig.37;
Fig.37 is a sectional view according to line XXXVII-XXXVII of Fig.38;
Fig.38 is a top plan view of the assembly of Fig.35;
Fig.39 is a perspective view of the assembly, in a fifth mounting phase;
Fig.40 is a top plan view of the assembly of Fig.39;
Fig.41 is a sectional view according to line XLI-XLI of Fig.40;
Fig.42 is a sectional view according to line XLII-XLII of Fig.41;
Fig.43 is a sectional view according to line XLIII-XLIII of Fig.41;
Fig.44 is a perspective view of a partially mounted control valve assembly, coupled with inlet chambers;
Fig.45 is a sectional view according to line XLV-XLV of Fig.48;
Fig.46 is a top plan view of the assembly of Fig.44;
Fig.47 is a sectional view according to line XLVII-XLVII of Fig.48; and
Fig.48 is a sectional view according to line XLVIII-XLVIII of Fig.46.

### DETAILED DESCRIPTION OF EMBODIMENTS

According to one aspect, the present subject matter is directed to a shutter for a control valve assembly of a steam turbine. The shutter has an inventive shape which allows to operate within the traverse. Specifically, the shutter is formed, as a single piece, by a closing end, a head and a stem, wherein the stem connects the head and the closing end, the head is larger than the stem in a first direction, the head is wide as the stem in a second direction, and the closing end is larger than the stem. The outer surface of the shutter improves the operational life of the control valve assembly; the head has a top planar surface and a lateral surface; the lateral surface consists of two planar portions connected by two curved portions.

According to a more general aspect, the subject matter disclosed herein is directed to a control valve assembly for a steam turbine, comprising a traverse, a plurality of shutters slidingly mounted at least partially within through cavities of the traverse, and spacers into said through cavities. The steam turbulence does not rotate the shutters around its longitudinal axis as well as around other axis because the traverse is closed on the top by a cap. Both the traverse and the cap have through cavities but with different orientation. Stress onto the shutter is reduced preventing cracks due to threads absence. Therefore, the operational life of the assembly increases, as well as the accuracy of the opening/closing of the valve, namely the coupling of the closing end of the shutters with the seat valves.

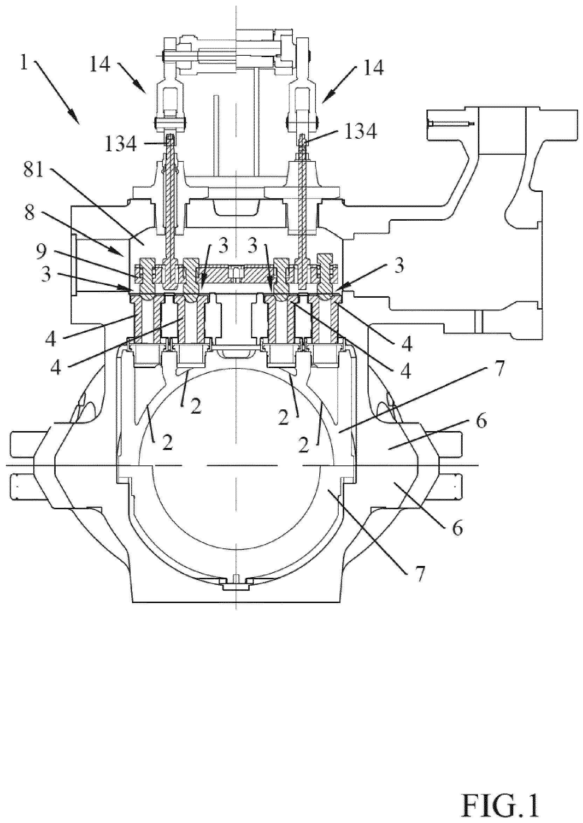

Referring now to the drawings, a steam turbine 1 comprises nozzle groups 2 and control valves 3 (Figure 1). Each control valve 3 has a valve seat 4 leading to nozzle groups 2. The steam turbine 1 comprises an outer housing 6, an inner housing 7 and a control valve assembly 8. Each housing 6, 7 comprises an upper and a lower portion.

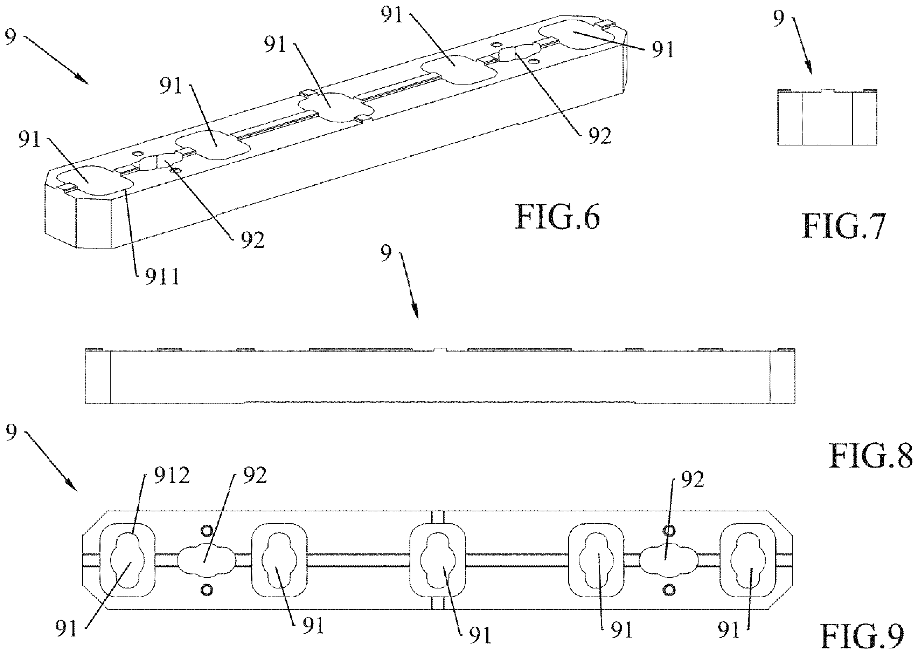

The working fluid, namely steam, flows through a tubular inlet towards the assembly 8 which comprises a traverse 9 (Figures 6-9), having first through cavities 91 (Figure 9) and second through cavities 92, and shutters 10. The traverse 9 is provided with a bottom face 914 (Figure 9). Each control valve 3 comprises a shutter 10 engaging a valve seat 4.

As evident from Figure 1 the traverse 9 is arranged within the tubular inlet 81 such that steam gets pressure over the traverse 9 and under the traverse 9, wherein the shutters 10 engages the valve seats 4. The steam flows between the traverse 9 and the valve seats 4 interacting with the shutters 10, not only in a horizontal direction but in a random way providing turbulence onto the assembly 8.

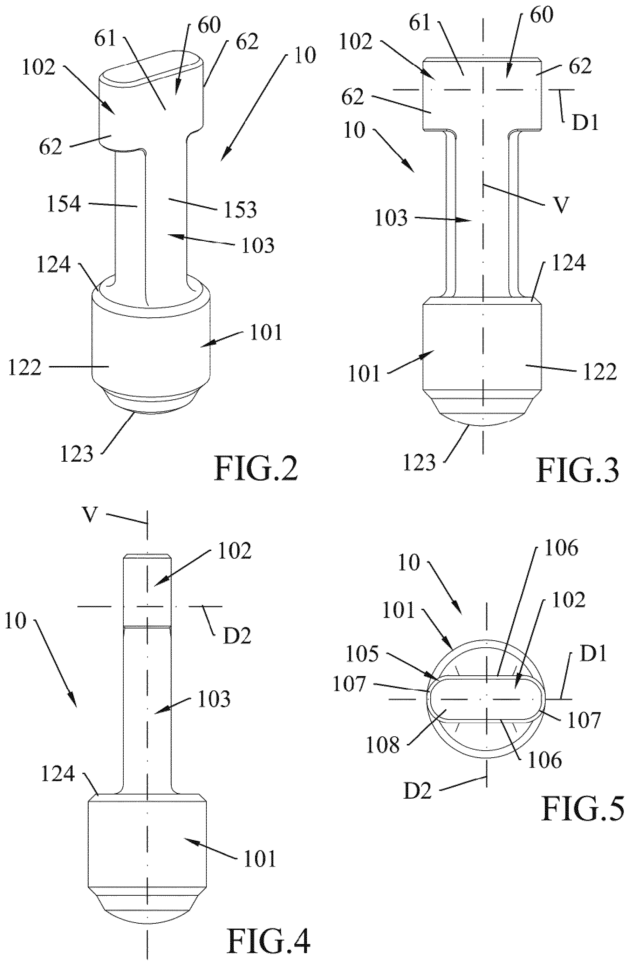

Each shutter 10 (Figures 2-5) is formed, as a single piece, by a closing end 101, a head 102 and a stem 103 connecting said closing end 101 with said head 102. Said head 102 has a top planar surface 108. The closing end 101 is able to engage the valve seat 4 such that the flow of the steam is prevented.

Shutter 10 is not provided with threads or other connecting means; differently it is provided with external planar surfaces with reduce stress when shutter 10 interacts with the traverse 9. Specifically, the shape of said planar surface 108 substantially corresponds to the shape of a sectional view according to a plan orthogonal to a longitudinal axis V of the stem 103. In said sectional view, as well as in the top plan view, the head 102 is larger than the stem 103 in a first direction D1 (Figure 5). We point out the longitudinal axis V corresponds to the vertical axis, namely the opening/closing direction of the valve seats 4 by the shutters 10 driven by the traverse 9.

In a second direction D2, orthogonal to said first direction D1, the head 102 is wide as the stem 103 (Figure 4). This means that the head 102 with the stem 103 has a hammer shape, which allows a specific movability of the shutter 10 through the traverse 9 as it will be clearer later.

The closing end 101 of the shutter 10 comprises a cylindrical portion 122 with un upper face 124, and a calotte 123 under said cylindrical portion 122. The stem 103 ends onto the top of the closing end 101. The continuity of the external surface of the cylindrical portion 122 allows the steam to slide over, reducing the strength moments on the shutter 10. The calotte 123 allows a light but effective rest onto the valve seat 4.

The longitudinal axis V of the stem 103 corresponds to the symmetrical axis of the cylindrical portion 122. In a sectional view according to a plan orthogonal to the longitudinal axis V, as well as in the top plan view, the closing end 101 is larger than the stem 103, specifically the cylindrical portion 122 is larger than the stem 103; the cylindrical portion 122 is larger than the calotte 123.

The stem 103 has two planar lateral surfaces 153 connected by two curved lateral surfaces 154. The head 102 has a lateral surface 60 consisting of two planar portions 61 connected by two curved portions 62. Continuity of the lateral surfaces of the stem 103 improves the dispersion of the energy interaction between the shutter 10 and the traverse 9.

Looking at Figures 6-9, relating to the engagement of the shutter 10 through the traverse 9, each shutter 10 is mounted at least partially within the respective cavity 91 of the traverse 9. Each cavity 91 has a top profile 911 and a bottom profile 912. The bottom profile 912 has a shape which allows the head 102 of the shutter 10 to vertically slide through without rotating only when the shutter 10 has a first defined angular position A1 about the axis V.

Referring to Figures 2, 3, 4, 6 and 9, the stem 103 can always slide and rotate within said bottom profile 912. The top profile 911 allows the head 102 and the stem 103 to vertically slide through according to any angular position. Thus, both the head 102 and the stem 103 can rotate within the top profile 911. The shape of said bottom profile 912 is such that the closing end 101 can't slide through it.

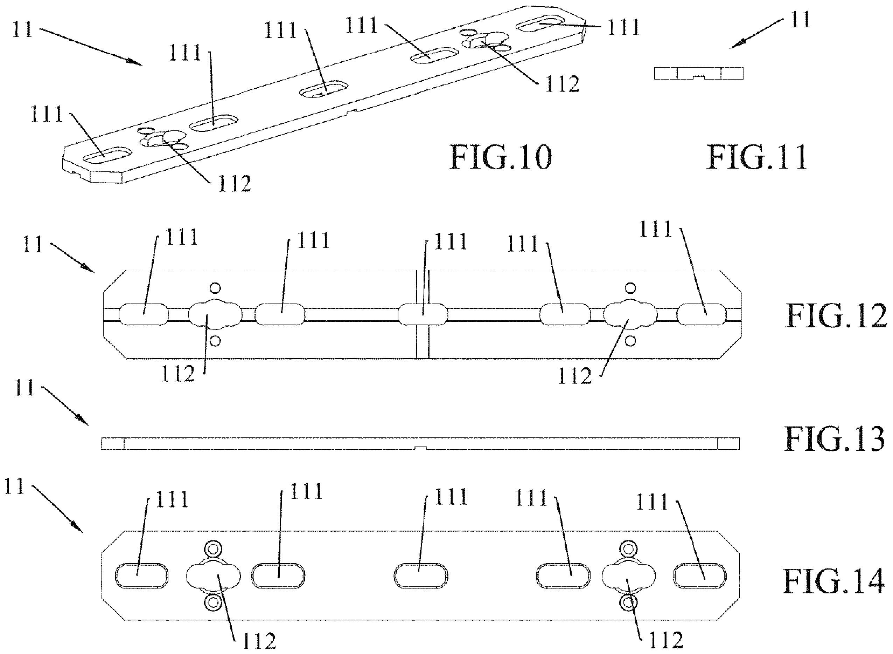

With reference to Figures 10-14, the assembly 8 further comprises a cap 11 able to be mounted onto the top of the traverse 9 such that the shutter 10 can't disengage the traverse sliding through the cap 11. The cap 11 comprises first through cavities 111 and second through cavities 112. Each second through cavity 112 has a shape which is oriented and corresponds to said second through cavity 92 of the traverse 9.

Each cavity 111 has a shape which allows the head 102 of the shutter 10 to vertically slide through without rotating only when the shutter 10 has a second defined angular position A2 about the axis V which is rotated of 90° with respect said first defined angular position A1. Said cavity 111 does not allow both the head 102 and the stem 103 to rotate within.

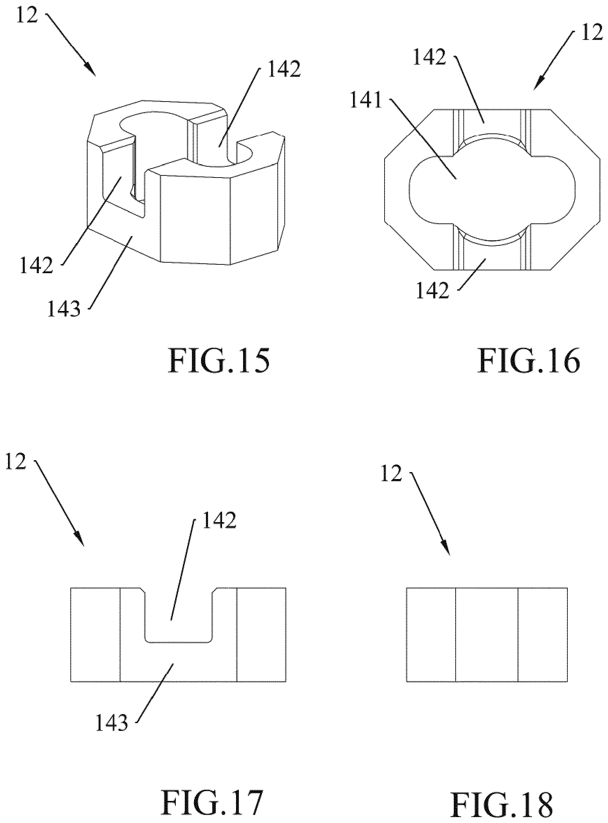

Figures 15-18 disclose spacers 12 which are mounted into said cavities 91 in order to set the vertical excursion of the shutter 10 according to defined opening/closing sequence, namely the vertical extension of the shutter 10 under the traverse towards the valve seat 4. Each spacer 12 has a through cavity 141 (Figure 16) with a shape which, when the spacer 12 is fixed into the cavity 91, the head 102 of the shutter 10 can vertically slide through only when the shutter 10 is in said first angular position A1.

When the spacer 12 is housed within the through cavity 91, the shape of the through cavity 141 is oriented and corresponds to the shape of the bottom profile 912. Each spacer 12 has also two opposite side gaps 142 (Figures 15, 17) facing to each other. Each gap 142 has a variable height, consisting of the height of the spacer 12 minus a base thickness 143 under the gaps 142, the height of the gaps 142 depending on the height of said base thickness 143 which varies from few millimeters to the height of the spacer 12 with respect the axis V. As explained above, said thickness depends on the defined opening/closing sequence. Referring to Figures 2, 15 and 16, the stem 103 can rotate within the spacer 12 because the curved lateral surfaces 154 are able to slide within the through cavity 141.

The traverse 9 is driven up and down by control rods 13 which are connected to the traverse 9. Said control rods 13 can be moved by conventional driving means 14.

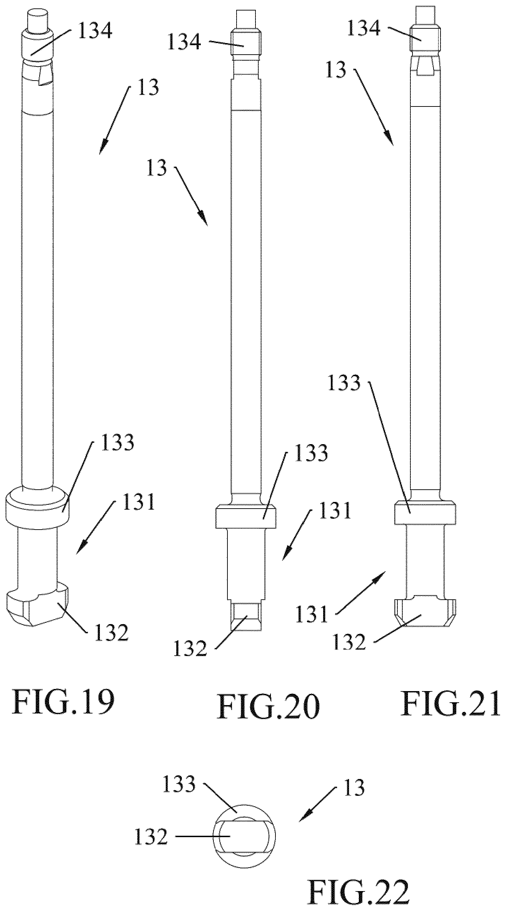

Examining Figures 19-22, the control rods 13 have respective fastening ends 131 engaging the traverse 9. Each fastening end 131 has a hammer end 132 which vertically slide through cavities 92, 112 only when the rod 10 is in said second angular position A2. Each fastening end 131 has also a fixing ring 133 which can't pass through any cavities of the traverse 5 neither of the cap 11. A top end 134 of each rod 13 can be connected to the driving means 14.

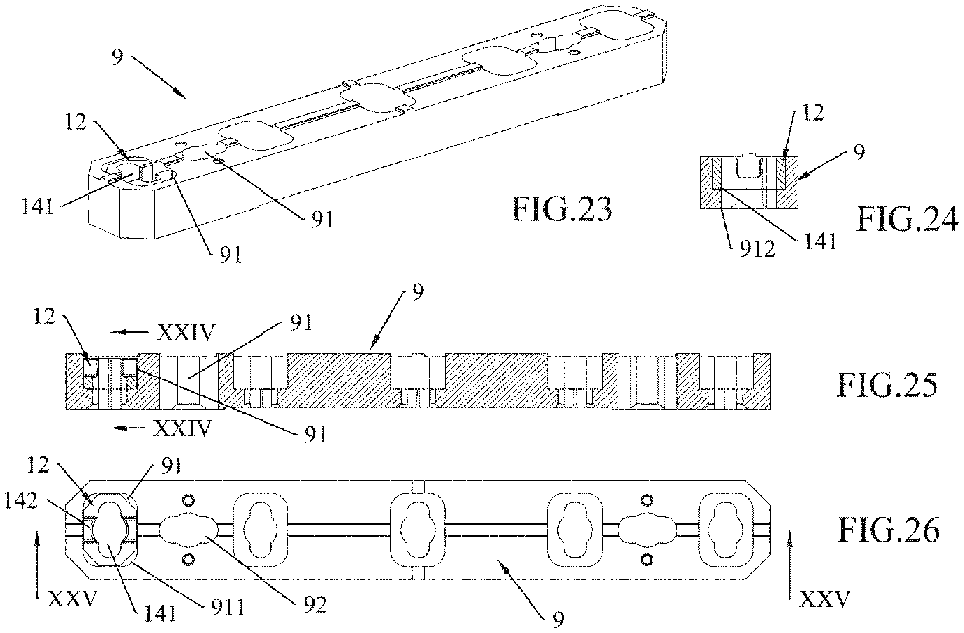

Operatively, considering a single shutter 10, the assembly 8 (Figure 1) is mounted according to the following phases (Figures 23-38).

In a first phase (Figures 23-26) a spacer 12 is placed inside a cavity 91 such that the cavity 141 has the same orientation of the bottom profile 912, leaving the head 102 of the shutter 10 passing through both the cavity 91, 141 in the second phase. Cavities 91 can house spacers 12 of different thickness 143 according to the defined opening/closing sequence.

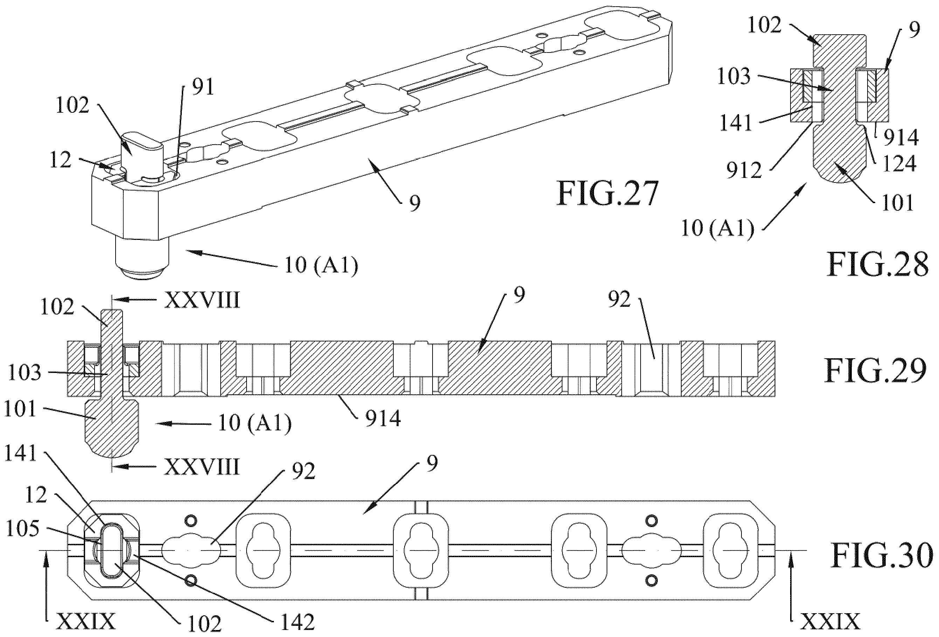

In the second phase (Figures 27-30), the shutter 10 is inserted from the bottom of the traverse 9 because it is oriented according to the first angular position A1, and the head 102 of the shutter 10 faces over the traverse 9 and the spacer 12. The shutter 10 is inserted until the upper face 124 of the closing end 101 touches the bottom face 914 of the traverse 9, the stem 103 sliding through the cavity 91 (Figures 3, 8 and 28).

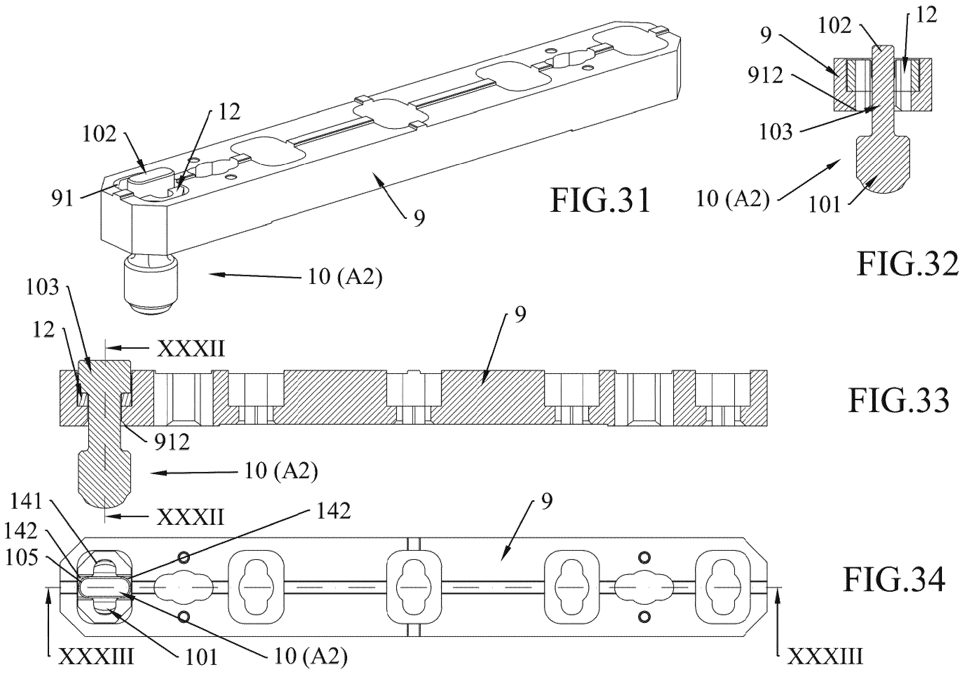

In the third phase (Figures 31-34) the shutter 10 is rotated of 90° around its axis V in the second angular position A2. Then it goes down, the head 102 resting on the gaps 142 of the spacer 12, partially within the cavity 91: the shutter 10 can't pass through the cavity 91 of the traverse 9.

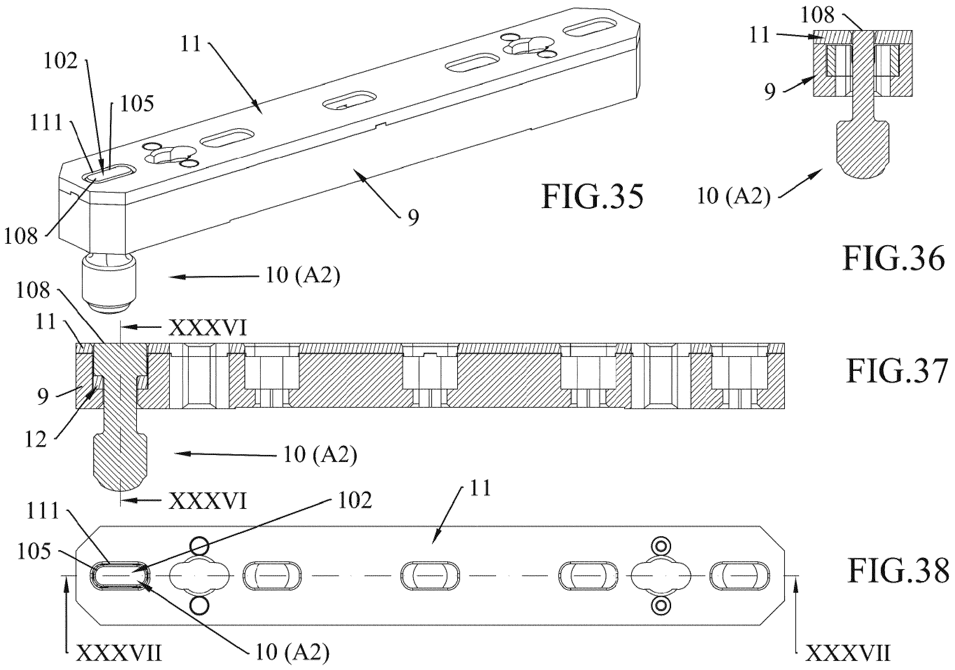

In the fourth phase (Figures 35-38) the cap 11 is mounted onto the top of the traverse 9: the cavity 111 is oriented such that the head 102 remains partially into the cavity 111 and partially into the cavity 91. The spacer 12 support the shutter 10. The shutter 10 can't rotate but it can only slide along its axis V, specifically towards the top with respect to the traverse 9. Both the head 102 and the stem 103 can't rotate within the cavity 111. The shutter 10 can only slide vertically along longitudinal axis V, within the traverse 9 for an amount depending to the thickness 154.

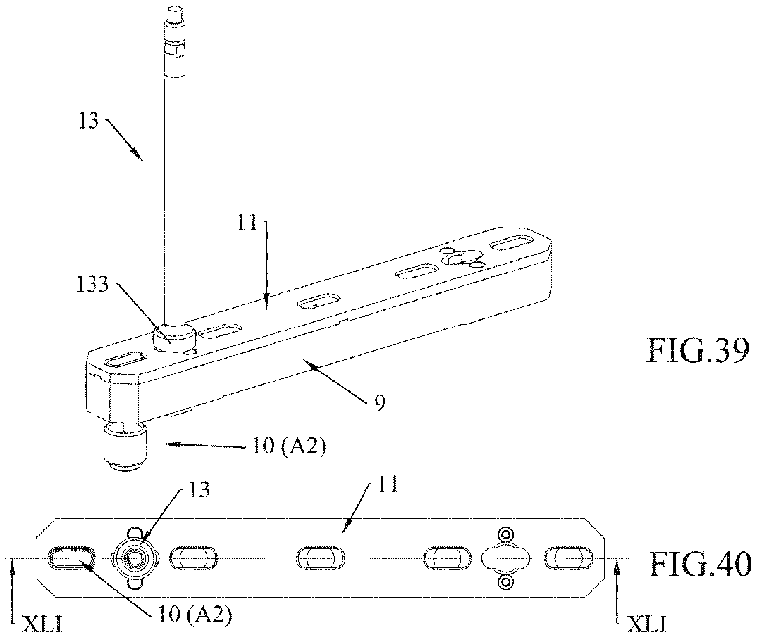

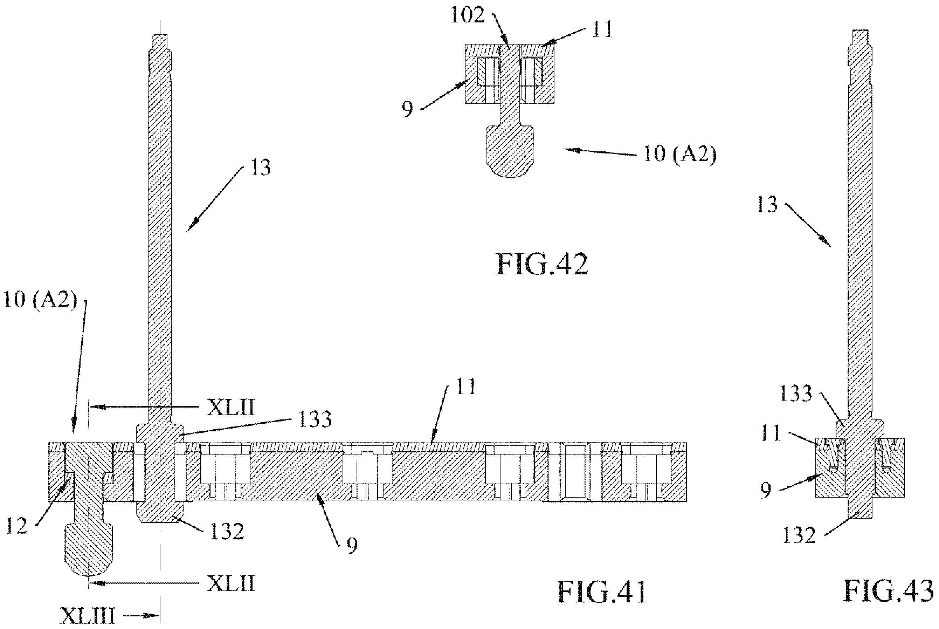

In the fifth phase (Figures 39-43) a rod 13 is coupled with the traverse 9 and the cap 11, passing the hammer end 132 through the aligned cavities 92, 112 and then rotating of 90°. The same applies to the other shutters 10 and to the other rod 13.

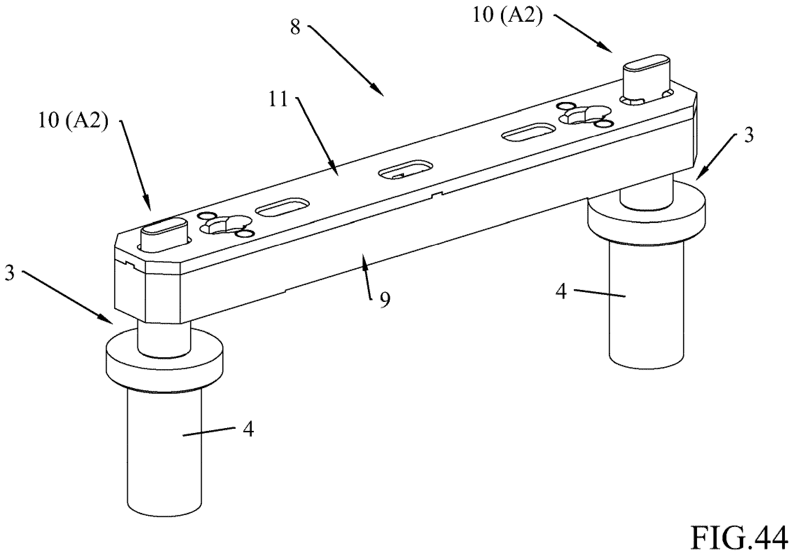

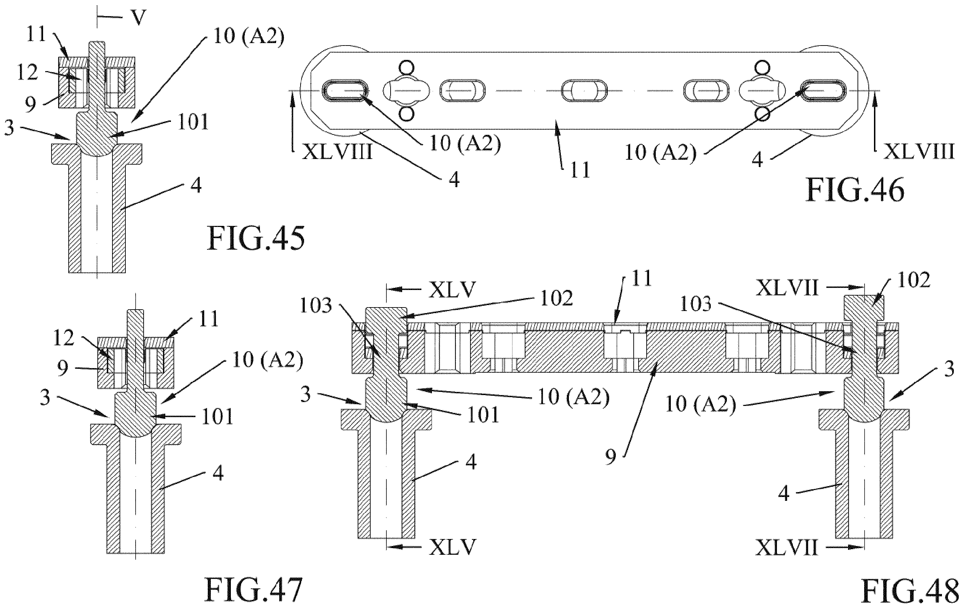

In Figures 44-48 it is shown an assembly 8 with two closing ends 101 of respective shutters 10 closing two respective valve seats 4. Shutters 10 have different height with respect the cap 11 due to different length of the stem 103. When the rods 13 pull up the traverse 9 and the cap 11, the closing ends 101 successively opens the valve scats 4 according to the height of the gaps 142 of the spacers 12 and of the shutters 10, namely when the spacers 12 go up they touch, with the base thickness 143 of their gaps 142, the head 102 of the shutter 10. The shutter 10 can slide in the direction of axis V until the head 102 touches the spacer 12 because of the assumed second angular position A2.

In the embodiment disclosed in Figure 1, when the driving means pulls up the traverse 9 by the control rods 13, the heads 102 of the shutters 10 interact with the internal surfaces of the cavities 91: the shutters 10 are stressed. The steam pressure increases this stress providing forces on the closing end 101 of the shutters 10, between the traverse 9 and the valve seats 4.

After opening of the valves, the turbulence on the shutters 10 increases due to the loss of the bond with valve seats 4. In this situation the advantages of the innovative assembly 8 became evident: the shutters 10 can slightly move within the cavities 91 without any pick of interacting energy with the traverse 9. The external surface of the shutters 10 smoothly touches the internal surface of the cavities 91.

Advantageously the steam turbulence does not rotate the shutters 10 around the longitudinal axis as well as around other axis, without breakage of the shutters 10. Therefore, the operational life of the assembly 8 increases, as well as the accuracy of the opening/closing of the valve, namely the coupling of the closing end 101 of the shutters 10 with the seat valves 4.

In a different embodiment, further reduction of vibrations can be achieved providing a damper and/or a stiffener (not shown in the Figures) into the cavities 91 of the traverse 9, onto the spacers 12 slidingly touching the stem 103 of the shutters 10.

## Claims

1. Shutter (10) for a control valve assembly (8) of a steam turbine (1), comprising a closing end (101), a head (102) and a stem (103),
wherein the closing end (101), the head (102) and the stem (103) are formed as a single piece,
the head (102) and the closing end (101) are connected by the stem (103), wherein the stem (103) comprises a longitudinal axis (V), the closing end (101) is larger than the stem (103) in a top plan view along the longitudinal axis (V), and **characterised in that** the head (102) is larger than the stem (103) in a first direction (D1) orthogonal to the longitudinal axis (V), and the head (102) is as wide as the stem (103) in a second direction (D2) orthogonal to the first direction (D1) and to the longitudinal axis (V).

2. The shutter (10) according to claim 1, wherein the head (102) has a top planar surface (108) and a lateral surface (60),
the lateral surface (60) consists of two planar portions (61) connected by two curved portions (62).

3. The shutter (10) according to claim 2, wherein the closing end (101) comprises a cylindrical portion (122) and a calotte (123) under the cylindrical portion (122).

4. The shutter (10) according to any of the preceding claims, wherein the stem (103) is formed by two planar lateral surfaces (153) connected by two curved lateral surfaces (154).

5. Control valve assembly (8) for a steam turbine (1), the control valve assembly (8) comprising
a traverse (9), a plurality of shutters (10) slidingly mounted at least partially within through cavities (91) of the traverse (5), and spacers (12) into the through cavities (91), wherein
each shutter (10) has a shape according to any of the preceding claims.

6. The control valve assembly (8) according to claim 5, wherein
each through cavity (91) of the traverse (9) has a top profile (911) and a bottom profile (912),
the bottom profile (912) has a shape which allows the head (102) and the stem (103) of the shutter (10) to vertically slide through only when the shutter (10) has a first defined angular position (A1) about the longitudinal axis (V) of the shutter (10),
the top profile (911) allows the head (102) and the stem (103) to vertically slide through according to any angular position,
the control valve assembly (8) further comprises a cap (11) able to be mounted onto the top of the traverse (9),
the cap (11) comprises through cavities (111),
each through cavity (111) of the cap (11) has a shape which allows the head (102) and the stem (103) of the shutter (10) to vertically slide through without rotating only when the shutter (10) has a second defined angular position (A2) about the longitudinal axis (V),
each spacer (12) has a through cavity (121) with a shape such that the head (102) of the shutter (10) can vertically slide through only when the shutter (10) is in said first defined angular position (A1).

7. The control valve assembly (8) according to claim 6, wherein the first
defined angular position (A1) is rotated of 90° with respect to the second defined angular position (A2).

8. The control valve assembly (8) according to claims ' 6 or 7, wherein each spacer (12) has also two opposite side gaps (122) facing to each other.

9. The control valve assembly (8) according to any of claims 6-8, wherein each spacer (12) is separably mounted into the respective through cavity (91) of the traverse (9).

10. The control valve assembly (8) according to any of claims 6-8, wherein each spacer (12) is fixed to the traverse (9) into the respective through cavity (91).

## Patentansprüche

1. Verschluss (10) für eine Steuerventilanordnung (8) einer Dampfturbine (1), umfassend ein Verschlussende (101), einen Kopf (102) und einen Schaft (103),
wobei das Verschlussende (101), der Kopf (102) und der Schaft (103) einstückig ausgebildet sind,
wobei der Kopf (102) und das Verschlussende (101) durch den Schaft (103) verbunden sind, wobei der Schaft (103) eine Längsachse (V) umfasst, wobei das Verschlussende (101) in einer Draufsicht entlang der Längsachse (V) größer als der Schaft (103) ist, und **dadurch gekennzeichnet, dass** der Kopf (102) in einer ersten Richtung (D1) orthogonal zur Längsachse (V) größer als der Schaft (103) ist,
und der Kopf (102) in einer zweiten Richtung (D2) orthogonal zu der ersten Richtung (D1) und zu der Längsachse (V) so breit wie der Schaft (103) ist.

2. Verschluss (10) nach Anspruch 1, wobei der Kopf (102) eine obere planare Oberfläche (108) und eine seitliche Oberfläche (60) aufweist, wobei die seitliche Oberfläche (60) aus zwei planaren Abschnitten (61) besteht, die durch zwei gekrümmte Abschnitte (62) verbunden sind.

3. Verschluss (10) nach Anspruch 2, wobei das Verschlussende (101) einen zylindrischen Abschnitt (122) und eine Kalotte (123) unter dem zylindrischen Abschnitt (122) umfasst.

4. Verschluss (10) nach einem der vorstehenden Ansprüche, wobei der Schaft (103) durch zwei planare seitliche Oberflächen (153) ausgebildet ist, die durch zwei gekrümmte seitliche Oberflächen (154) verbunden sind.

5. Steuerventilanordnung (8) für eine Dampfturbine (1), wobei die Steuerventilanordnung (8) eine Traverse (9), eine Vielzahl von Verschlüssen (10), die mindestens teilweise innerhalb der Durchgangshohlräume (91) der Traverse (5) verschiebbar angebracht sind, und Abstandshalter (12) in den Durchgangshohlräumen (91) umfasst, wobei jeder Verschluss (10) eine Form nach einem der vorstehenden Ansprüche aufweist.

6. Steuerventilanordnung (8) nach Anspruch 5, wobei jeder Durchgangshohlraum (91) der Traverse (9) ein oberes Profil (911) und ein unteres Profil (912) aufweist, wobei das untere Profil (912) eine Form aufweist, die ein vertikales Durchgleiten des Kopfes (102) und des Schaftes (103) des Verschlusses (10) nur dann ermöglicht, wenn der Verschluss (10) eine erste definierte Winkelposition (A1) um die Längsachse (V) des Verschlusses (10) aufweist, wobei das obere Profil (911) ein vertikales Durchgleiten des Kopfes (102) und des Schaftes (103) gemäß jeder beliebigen Winkelposition ermöglicht, wobei die Steuerventilanordnung (8) ferner eine Kappe (11) umfasst, die auf die Oberseite der Traverse (9) angebracht werden kann, wobei die Kappe (11) Durchgangshohlräume (111) umfasst, wobei jeder Durchgangshohlraum (111) der Kappe (11) eine Form aufweist, die ein vertikales Durchgleiten des Kopfes (102) und des Schaftes (103) des Verschlusses (10) ohne Drehung nur dann ermöglicht, wenn der Verschluss (10) eine zweite definierte Winkelposition (A2) um die Längsachse (V) aufweist, wobei jeder Abstandshalter (12) einen Durchgangshohlraum (121) mit einer solchen Form aufweist, dass der Kopf (102) des Verschlusses (10) nur dann vertikal durchgleiten kann, wenn sich der Verschluss (10) in der ersten definierten Winkelposition (A1) befindet.

7. Steuerventilanordnung (8) nach Anspruch 6, wobei die erste definierte Winkelposition (A1) in Bezug auf die zweite definierte Winkelposition (A2) um 90° gedreht ist.

8. Steuerventilanordnung (8) nach Anspruch 6 oder 7, wobei jeder Abstandshalter (12) auch zwei gegenüberliegende Seitenspalte (122) aufweist, die einander zugewandt sind.

9. Steuerventilanordnung (8) nach einem der Ansprüche 6-8, wobei jeder Abstandshalter (12) trennbar in dem jeweiligen Durchgangshohlraum (91) der Traverse (9) angebracht ist.

10. Steuerventilanordnung (8) nach einem der Ansprüche 6-8, wobei jeder Abstandshalter (12) an der Traverse (9) in dem jeweiligen Durchgangshohlraum (91) befestigt ist.

## Revendications

1. Volet (10) pour un ensemble de soupape de commande (8) d'une turbine à vapeur (1), comprenant une extrémité de fermeture (101), une tête (102) et une tige (103),
dans lequel l'extrémité de fermeture (101), la tête (102) et la tige (103) sont formées d'une seule pièce,
la tête (102) et l'extrémité de fermeture (101) sont reliées par la tige (103), dans lequel la tige (103) comprend un axe longitudinal (V),
l'extrémité de fermeture (101) est plus grande que la tige (103) dans une vue en plan de dessus le long de l'axe longitudinal (V), et **caractérisé en ce que**
la tête (102) est plus grande que la tige (103) dans une première direction (D1) orthogonale à l'axe longitudinal (V),
et la tête (102) est aussi large que la tige (103) dans une deuxième direction (D2) orthogonale à la première direction (D1) et à l'axe longitudinal (V).

2. Volet (10) selon la revendication 1, dans lequel la tête (102) présente une surface plane supérieure (108) et une surface latérale (60), la surface latérale (60) est constituée de deux parties planes (61) reliées par deux parties incurvées (62).

3. Volet (10) selon la revendication 2, dans lequel l'extrémité de fermeture (101) comprend une partie cylindrique (122) et une calotte (123) sous la partie cylindrique (122).

4. Volet (10) selon l'une quelconque des revendications précédentes, dans lequel la tige (103) est formée par deux surfaces latérales planes (153) reliées par deux surfaces latérales incurvées (154).

5. Ensemble de soupape de commande (8) pour une turbine à vapeur (1), l'ensemble de soupape de commande (8) comprenant une traverse (9), une pluralité de volets (10) montés de façon coulissante au moins partiellement dans des cavités passantes (91) de la traverse (5), et des entretoises (12) dans les cavités passantes (91), dans lequel chaque volet (10) présente une forme selon l'une quelconque des revendications précédentes.

6. Ensemble de soupape de commande (8) selon la revendication 5, dans lequel chaque cavité passante (91) de la traverse (9) présente un profil supérieur (911) et un profil inférieur (912), le profil inférieur (912) a une forme qui permet à la tête (102) et à la tige (103) du volet (10) de coulisser verticalement à travers uniquement lorsque le volet (10) présente une première position angulaire définie (A1) autour de l'axe longitudinal (V) du volet (10), le profil supérieur (911) permet à la tête (102) et à la tige (103) de coulisser verticalement selon n'importe quelle position angulaire, l'ensemble de soupape de commande (8) comprend en outre un capuchon (11) apte à être monté sur le sommet de la traverse (9), le capuchon (11) comprend des cavités passantes (111), chaque cavité passante (111) du capuchon (11) a une forme qui permet à la tête (102) et à la tige (103) du volet (10) de coulisser verticalement sans rotation uniquement lorsque le volet (10) présente une deuxième position angulaire définie (A2) autour de l'axe longitudinal (V), chaque entretoise (12) a une cavité passante (121) avec une forme telle que la tête (102) du volet (10) peut coulisser verticalement uniquement lorsque le volet (10) est dans ladite première position angulaire définie (A1).

7. Ensemble de soupape de commande (8) selon la revendication 6, dans lequel la première position angulaire définie (A1) est tournée de 90° par rapport à la deuxième position angulaire définie (A2).

8. Ensemble de soupape de commande (8) selon les revendications 6 ou 7, dans lequel chaque entretoise (12) présente également deux espaces latéraux opposés (122) l'un en face de l'autre.

9. Ensemble de soupape de commande (8) selon l'une quelconque des revendications 6 à 8, dans lequel chaque entretoise (12) est montée de manière amovible dans la cavité passante (91) respective de la traverse (9).

10. Ensemble de soupape de commande (8) selon l'une quelconque des revendications 6 à 8, dans lequel chaque entretoise (12) est fixée à la traverse (9) dans la cavité passante (91) respective.
